# EUROPÄISCHE PATENTANMELDUNG

(11) **EP 1 900 990 A2**
(43) Veröffentlichungstag der Anmeldung: **19.03.2008**
(21) Anmeldenummer: 07016105.4
(22) Anmeldetag: 16.08.2007
(51) Int. Cl.: F16L 37/084, F16L 37/00, F16L 41/03, F16L 41/08

(54) **Rohrsystem, Rohr mit Dichtelement sowie Verfahren zur Herstellung einer Baugruppe aus einem Rohr und einem Dichtelement**

(30) Priorität: 15.09.2006 DE 102006043373
(71) Anmelder: TRW Automotive Electronics & Components GmbH, 78315 Radolfzell (DE)
(72) Erfinder: Loewe, Hubert, 66919 Weselberg (DE)
(74) Vertreter: Sties, Jochen

(57) **Zusammenfassung**

Die Erfindung betrifft ein Rohrsystem (8), insbesondere für eine Flächenheizung bzw. Flächenkühlung, mit einem ersten Rohr (10) und einem Dichtelement (12), wobei das Dichtelement (12) in das erste Rohr (10) eingespritzt ist.

Des weiteren betrifft die Erfindung ein Rohr (10) mit Dichtelement (12), das in einem Zwei-Komponenten-Spritzgußverfahren herstellbar ist, wobei zunächst das Rohr (10) aus einem ersten Kunststoff gespritzt und danach das Dichtelement (12) aus einem zweiten Kunststoff in das Rohr (10) eingespritzt wird.

Die Erfindung umfaßt auch ein Verfahren zur Herstellung einer Baugruppe aus einem Rohr (10) und einem Dichtelement (12), bei dem in einem ersten Schritt das Rohr (10) aus einem ersten Kunststoffmaterial gespritzt wird, wobei Aussparungen (18) für das Dichtelement (12) vorgesehen werden, und in einem zweiten Schritt das Dichtelement (12) aus einem zweiten Kunststoffmaterial in das Rohr (10) eingespritzt wird, so daß das Rohr (10) und das Dichtelement (12) eine Formschluß- und Reibschlußverbindung eingehen.

## Beschreibung

Die Erfindung betrifft ein Rohrsystem, insbesondere für eine Flächenheizung bzw. Flächenkühlung, ein Rohr mit Dichtelement sowie ein Verfahren zur Herstellung einer Baugruppe aus einem Rohr und einem Dichtelement.

Aus dem Stand der Technik sind bereits Rohrsysteme mit mehreren Rohren bekannt, wobei die Rohre im Stoßbereich Dichtelemente, vorzugsweise Dichtringe, aufweisen, so daß die einzelnen Rohre dichtend verbunden werden können. Insbesondere bei Rohrverbindungen in Flächenheiz- bzw. Flächenkühlsystemen ist es derzeit allerdings üblich, die einzelnen Rohre miteinander zu verschweißen. Durch diese zuverlässig dichtende Verbindungsart wird das Risiko von Leckagen und damit verbundenen, aufwendigen und kostenintensiven Sanierungen minimiert. Um die Schweißverbindungen mit entsprechender Sorgfalt herstellen zu können, werden die Rohrsysteme bereits im Werk "nach Maß" vorgefertigt und als komplettes, flächiges Rohrsystem zum Einsatzort transportiert. Neben dem aufwendigen Transport weist dieses Vorgehen den Nachteil auf, daß am Einbauort auf vorhandene Maßtoleranzen oder Änderungswünsche nur noch bedingt eingegangen werden kann.

Daher ist es Aufgabe der Erfindung, ein Rohrsystem zu schaffen, bei dem einzelne Rohre unter zuverlässiger Gewährleistung der Dichtigkeit mit geringem Aufwand hergestellt und verbunden werden können.

Erfindungsgemäß wird die Aufgabe durch ein Rohrsystem mit einem ersten Rohr und einem Dichtelement gelöst, wobei das Dichtelement in das Rohr eingespritzt ist. Durch das Einspritzen des Dichtelements wird zwischen dem ersten Rohr und dem Dichtelement eine sehr zuverlässige Dichtung geschaffen, da sich zwischen diesen beiden Teilen eine gute Oberflächenhaftung ausbildet. Das Dichteelement ist außerdem unverlierbar und exakt an der gewünschten Stelle fixiert und muß nicht manuell an das Rohr montiert werden.

Besonders bevorzugt sind das erste Rohr und das Dichtelement als Zwei-Komponenten-Spritzgußteil hergestellt. Bei entsprechender Materialwahl und Formgebung ist es somit sehr einfach möglich, das erste Rohr und das Dichtelement unlösbar miteinander zu verbinden. Dieses Verfahren ist beispielsweise in der DE 33 40 122 A1 offenbart, auf die Bezug genommen wird. Mit diesem Verfahren ist es grundsätzlich möglich, ein Spritzgußteil in einem weiteren Spritzgußteil so aushärten zu lassen, daß sie nach dem Aushärten unlösbar verbunden sind. Zunächst wird ein erstes Spritzgußteil in einer ersten Form gefertigt. Dann wird das erste Spritzgußteil aus der ersten Form entnommen und in eine zweite Form verbracht. Dabei härtet das erste Spritzgußteil so weit aus und gewinnt so weit an Festigkeit, daß ein Spritzgußmaterial in die zweite Form eingespritzt werden kann, wobei es beispielsweise Öffnungen des ersten Spritzgußteils ausfüllt und darin zu einem zweiten Spritzgußteil aushärtet.

Vorzugsweise sind im ersten Rohr Aussparungen und im Dichtelement zu den Aussparungen komplementäre Vorsprünge vorgesehen, so daß das erste Rohr und das Dichtelement formschlüssig verbunden sind. Neben der Oberflächenhaftung trägt diese Formschlußverbindung zur Zuverlässigkeit der Verbindung bei, insbesondere auch hinsichtlich der Verbindungsdichtigkeit.

In einer Ausführungsform weist das Rohrsystem ein zweites Rohr auf, das in das erste Rohr eingeführt und mit dem ersten Rohr verbunden ist. Das Rohrsystem kann somit flexibel erweitert oder verändert werden.

Vorzugsweise ist an einem Wandungsabschnitt des ersten Rohres ein erstes Rastelement und am zweiten Rohr ein zweites Rastelement vorgesehen, wobei die zwei Rastelemente beim Zusammenstecken der Rohre eine Rastverbindung ausbilden. Somit können zusätzliche Rohre sehr einfach an ein bestehendes Rohrsystem zuverlässig und dichtend angeschlossen werden.

Des weiteren betrifft die Erfindung ein Verfahren zur Herstellung einer Baugruppe aus einem Rohr und einem Dichtelement, bei dem in einem ersten Schritt das Rohr aus einem ersten Kunststoffmaterial gespritzt wird, wobei Aussparungen für das Dichtelement vorgesehen werden, und in einem zweiten Schritt das Dichtelement aus einem zweiten Kunststoffmaterial in das Rohr eingespritzt wird, so daß das Rohr und das Dichtelement eine Formschluß- und Reibschlußverbindung eingehen.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
- Figur 1 einen Ausschnitt aus einem erfindungsgemäßen Rohrsystem in perspektivischer Explosionsansicht;
- Figur 2 ein vorgefertigtes Bauelement des erfindungsgemäßen Rohrsystems in einer perspektivischen Ansicht;
- Figur 3 einen Detailausschnitt des erfindungsgemäßen Rohrsystems in perspektivischer Ansicht;
- Figur 4 eine perspektivische Detailansicht eines Dichtelements des erfindungsgemäßen Rohrsystems;
- Figur 5 den perspektivischen Detailausschnitt nach Figur 3 mit eingesetztem Dichtelement nach Figur 4;
- Figur 6 einen perspektivischen Horizontalschnitt durch den Detailausschnitt nach Figur 5;
- Figur 7 einen Vertikalschnitt durch den Detailausschnitt nach Figur 5;
- Figur 8 den Horizontalschnitt nach Figur 6 mit eingeführtem und verrastetem zweiten Rohr; und
- Figur 9 den Vertikalschnitt nach Figur 7 mit eingeführtem und verrastetem zweiten Rohr.

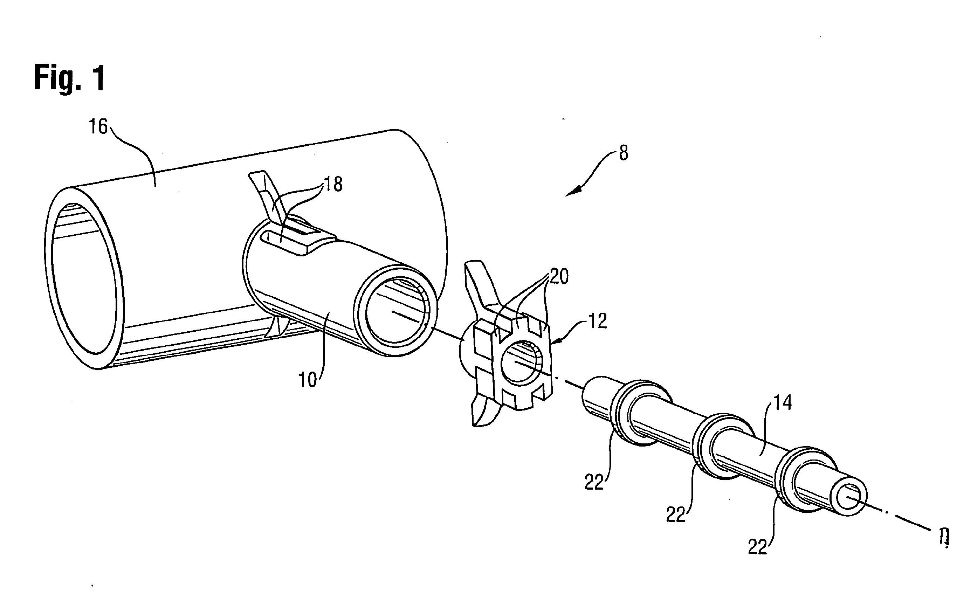

Die Figur 1 zeigt einen Ausschnitt aus einem Rohrsystem 8, insbesondere für eine Flächenheizung bzw. Flächenkühlung, mit einem ersten Rohr 10, einem Dichtelement 12 und einem zweiten Rohr 14. Das erste Rohr 10 ist im vorliegenden Fall als Abzweig einer Hauptleitung 16 ausgebildet, wobei die Hauptleitung 16 und das erste Rohr 10 vorzugsweise einstückig miteinander verbunden sind. Im vorliegenden Beispiel bestehen das erste Rohr 10 und die Hauptleitung 16 aus einem ersten Kunststoff, beispielsweise Polypropylen, und sind als ein Teil gespritzt. Alternativ ist es auch möglich, das erste Rohr 10 und die Hauptleitung 16 als separate Teile auszubilden und anschließend fest miteinander zu verbinden, beispielsweise zu verschweißen. Das Dichtelement 12 ist ebenfalls ein gespritztes Kunststoffteil, wobei es vorzugsweise aus einem zweiten, weichen und gut dichtenden Kunststoff, beispielsweise einem thermoplastischen Elastomer, gebildet ist.

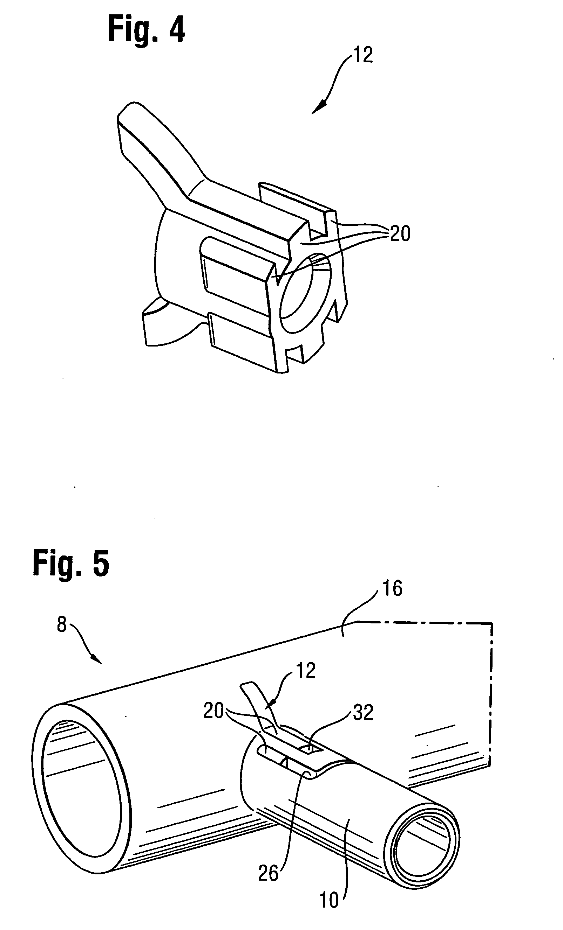

In Figur 1 ist bereits zu erkennen, daß das Dichtelement 12 eine Form aufweist, die ein Einsetzen des ausgehärteten Dichtelements 12 in das erste Rohr 10 bzw. das erste Rohr 10 und die Hauptleitung 16 nicht zuläßt. Aus diesem Grund wird das Dichtelement 12 gleich in das erste Rohr 10 eingespritzt und ist nach dem Aushärten unlösbar mit dem ersten Rohr 10 verbunden. Einerseits bildet sich zwischen dem Dichtelement 12 und dem ersten Rohr 10 bei geeigneter Materialwahl eine gute Oberflächenhaftung aus; andererseits sind im ersten Rohr 10 Aussparungen 18 und im Dichtelement 12 dazu komplementäre Vorsprünge 20 vorgesehen, so daß das erste Rohr 10 und das Dichtelement 12 auch formschlüssig verbunden sind (siehe auch Figur 5).

Des weiteren ist in Figur 1 ein Stück des zweiten Rohres 14 zu sehen, welches an das Rohrsystem 8, insbesondere an die Hauptleitung 16 angeschlossen werden soll. Am zweiten Rohr 14, welches auch als Kapillarrohr bezeichnet wird, sind Rohrvorsprünge 22 vorgesehen, welche im vorliegenden Fall flanschartig ausgebildet sind und am zweiten Rohr 14 senkrecht zur Rohrlängsachse A außenseitig umlaufen.

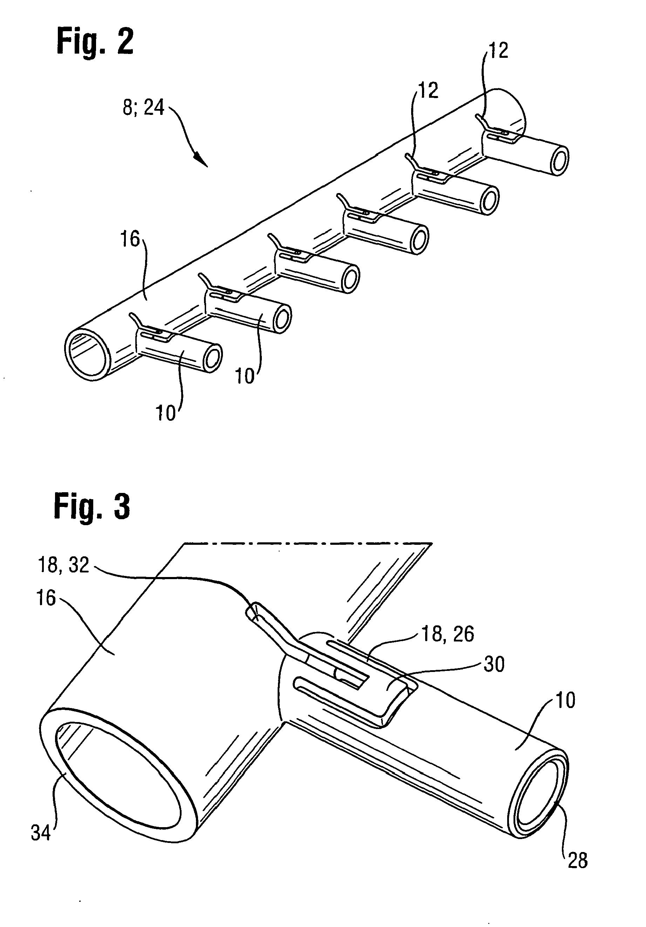

Die Figur 2 zeigt ein vorgefertigtes Bauelement 24 des Rohrsystems 8, welches aus einem Abschnitt der Hauptleitung 16, sechs ersten Rohren 10 und sechs Dichtelementen 12 besteht. Dieses Bauelement 24 ist komplett als Zwei-Komponenten-Spritzgußteil hergestellt.

Die Figur 3 zeigt ein Anschlußdetail des ersten Rohres 10 an die Hauptleitung 16. Gut zu sehen ist eine U-förmige Aussparung 26 im ersten Rohr 10, durch die in einer Rohrwandung 28 ein zungenförmiger Wandungsabschnitt 30 des ersten Rohres 10 in radialer Richtung flexibel und elastisch verformbar ist. Ferner ist ein Schlitz 32 zu sehen, der sich von der Rohrwandung 28 des ersten Rohres 10 in eine Wandung 34 der Hauptleitung 16 erstreckt.

Die Figur 4 zeigt eine perspektivische Ansicht des Dichtelements 12, welches als Dichthülse mit mehreren außenseitigen Vorsprüngen 20 ausgebildet ist. Lediglich aus Darstellungsgründen wurde in Figur 4 das erste Rohr 10, welches das Dichtelement 12 umgibt, weggelassen. In der Realität wird es ein solches einzelnes Dichtelement 12 nicht geben, da es beim Herstellen des ersten Rohres 10 unmittelbar in das Rohr eingespritzt wird. Das erste Rohr 10 und optional auch die Hauptleitung 16 bilden dabei wenigstens teilweise eine Spritzform für das Dichtelement 12.

Die Figur 5 zeigt das Anschlußdetail des ersten Rohres 10 an die Hauptleitung 16 mit eingespritztem Dichtelement 12. Es ist gut zu erkennen, daß der Schlitz 32 und die U-förmige Aussparung 26 wenigstens teilweise durch die Vorsprünge 20 des Dichtelements 12 gefüllt sind. Die nicht ausgefüllten Bereiche sind zum einen werkzeugtechnisch bedingt, zum anderen aber auch notwendig, damit sich der zungenförmige Wandungsabschnitt 30 beim Verbinden des ersten Rohres 10 mit dem zweiten Rohr 14 in radialer Richtung elastisch bewegen kann. Außerdem können dort, wenn das zweite Rohr 14 demontiert werden soll, entsprechende Werkzeuge eingreifen, um das zweite Rohr 14 wieder vom ersten Rohr 10 zu lösen.

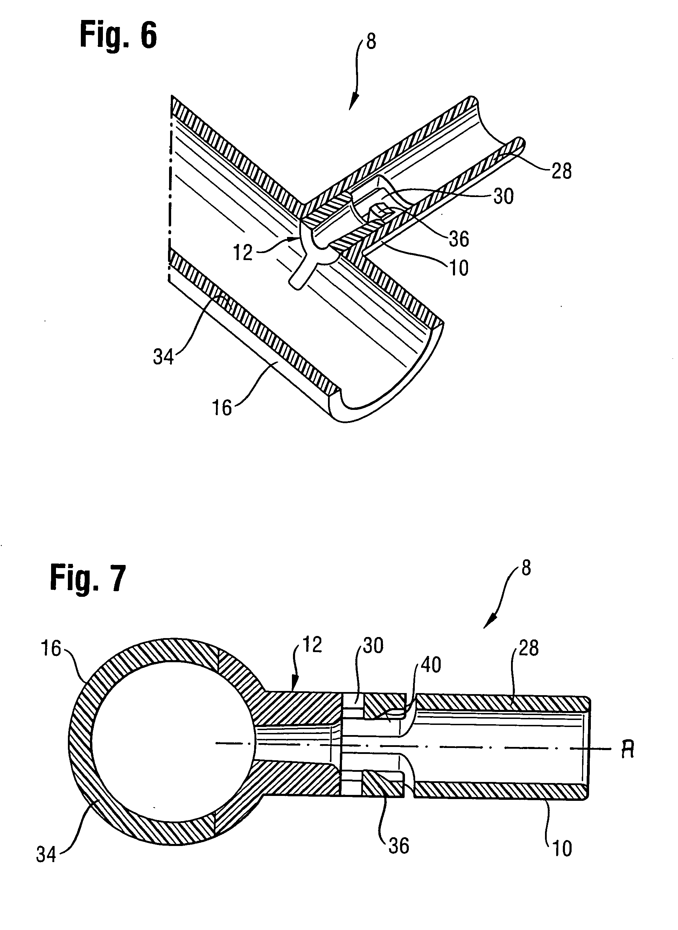

Die Figur 6 zeigt einen Horizontalschnitt durch den Detailausschnitt des Rohrsystems 8 nach Figur 5. In diesem Horizontalschnitt ist ein erstes Rastelement 36 zu sehen, das am zungenförmigen Wandungsabschnitt 30 angeformt ist. Die Figur 7 zeigt einen zugehörigen Vertikalschnitt durch den Detailausschnitt nach Figur 5 in der Rohrachse A des ersten Rohrs 10.

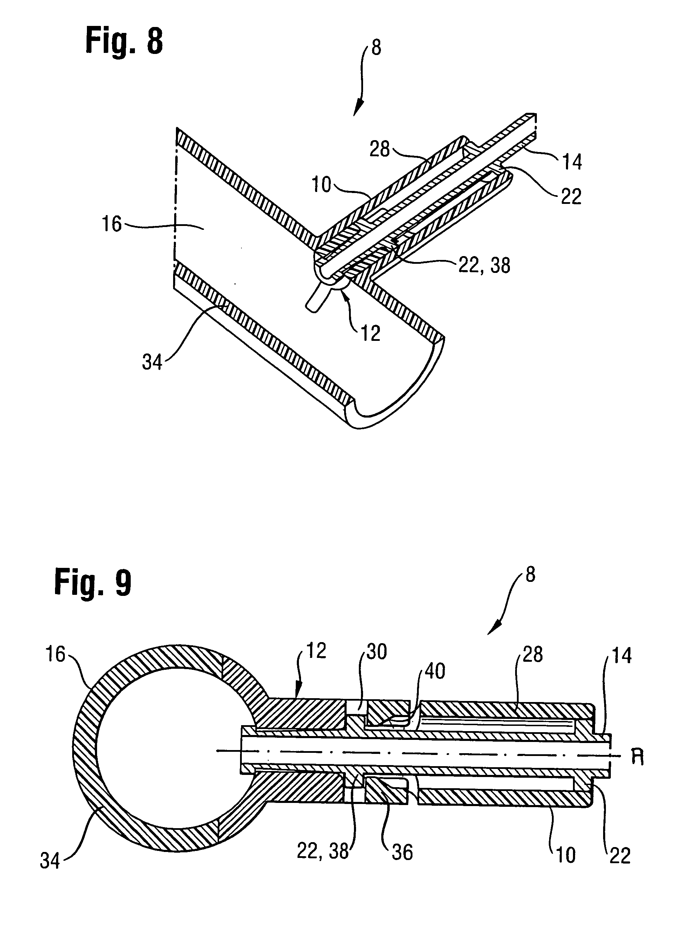

In der Figur 8 ist der Horizontalschnitt gemäß Figur 6 dargestellt, wobei das zweite Rohr 14 in das erste Rohr 10 eingeführt und mit dem ersten Rohr 10 verrastet ist. Analog entspricht die Figur 9 dem Vertikalschnitt aus Figur 7, allerdings mit eingeführtem und verrastetem zweiten Rohr 14.

Beim Einführen des zweiten Rohres 14 stößt derjenige flanschartige Rohrvorsprung 22, der einem axialen Rohrende am nächsten ist und ein zweites Rastelement ausbildet, an eine schräge Fläche 40 des ersten Rastelements 36. Bei weiterem Einschieben des zweiten Rohres in Richtung zur Hauptleitung 16 gleitet der Rohrvorsprung 22 an der schrägen Fläche 40, so daß sich der zungenförmige Wandungsabschnitt 30 radial nach außen bewegt. Schließlich stößt der Rohrvorsprung 22 am Dichtelement 12 an, und der zungenförmige Wandungsabschnitt 30 mit dem ersten Rastelement 36 schnappt in seine Ausgangsstellung zurück. Das zweite Rohr 14 ist damit in Richtung seiner Rohrachse am ersten Rohr 10 fixiert. Vorzugsweise wird das Dichtelement 12 beim Einführen des zweiten Rohres 14 etwas zusammengedrückt, bevor das erste Rastelement 36 in seine Ausgangsposition zurückschnappt. Die Dichtwirkung zwischen dem Dichtelement 12 und dem zweiten Rohr 14 wird dadurch verbessert. Außerdem ist das zweite Rohr 14 dann spielfrei gelagert, so daß zwischen dem ersten und dem zweiten Rohr 10, 14 keine Klappergeräusche auftreten können.

In den Figuren 8 und 9 ist gut zu erkennen, daß sich, vom axialen Rohrende aus gesehen, der zweite Rohrvorsprung 22 ebenfalls im Inneren des ersten Rohres 10 befindet. Dadurch ist das zweite Rohr 14 im Bereich seines axialen Endes im ersten Rohr 10 geführt und kann sich quer zu seiner Rohrachse relativ zum ersten Rohr 10 nicht verbiegen. Folglich kann dieser zweite Rohrvorsprung 22 des zweiten Rohres 14 auch als Führungselement 22 bezeichnet werden. Die Verbindung zwischen dem ersten Rohr 10, dem Dichtungselement 12 und dem zweiten Rohr 14 wird damit vor unerwünschten Beanspruchungen geschützt, welche ansonsten die Dichtigkeit der Verbindung gefährden könnten.

## Patentansprüche

1. Rohrsystem, insbesondere für eine Flächenheizung bzw. Flächenkühlung, mit einem ersten Rohr (10) und einem Dichtelement (12), wobei das Dichtelement in das Rohr (10) eingespritzt ist.

2. Rohrsystem nach Anspruch 1, **dadurch gekennzeichnet, daß** das erste Rohr (10) und das Dichtelement (12) unlösbar miteinander verbunden sind.

3. Rohrsystem nach Anspruch 1 oder 2, **dadurch gekennzeichnet, daß** das erste Rohr (10) und das Dichtelement (12) als Zwei-Komponenten-Spritzgußteil hergestellt sind.

4. Rohrsystem nach einem der vorhergehenden Ansprüche, **dadurch gekennzeichnet, daß** im ersten Rohr (10) Aussparungen (18) und im Dichtelement (12) dazu komplementäre Vorsprünge (20) vorgesehen sind, so daß das erste Rohr (10) und das Dichtelement (12) formschlüssig verbunden sind.

5. Rohrsystem nach einem der vorhergehenden Ansprüche, **dadurch gekennzeichnet, daß** das erste Rohr (10) ein Abzweig von einer Hauptleitung (16) ist.

6. Rohrsystem nach Anspruch 5, **dadurch gekennzeichnet, daß** das erste Rohr (10) und die Hauptleitung (16) einstückig ausgebildet sind.

7. Rohrsystem nach einem der vorhergehenden Ansprüche, **gekennzeichnet durch** ein zweites Rohr (14), das in das erste Rohr (10) eingeführt und mit dem ersten Rohr (10) verbunden ist.

8. Rohrsystem nach Anspruch 7, **dadurch gekennzeichnet, daß** das Dichtelement (12) in radialer Richtung zwischen dem ersten Rohr (10) und dem zweiten Rohr (14) liegt.

9. Rohrsystem nach Anspruch 7 oder 8, **dadurch gekennzeichnet, daß** das zweite Rohr (14) ein Führungselement (22) aufweist, das nach der Verbindung des ersten und zweiten Rohres (10, 14) vom Dichtelement (12) beabstandet ist und das zweite Rohr (14) quer zur Rohrachse relativ zum ersten Rohr (10) fixiert.

10. Rohrsystem nach einem der vorhergehenden Ansprüche, **dadurch gekennzeichnet, daß** wenigstens ein Wandungsabschnitt (30) des ersten Rohres (10) in radialer Richtung flexibel ist und elastisch verformt werden kann.

11. Rohrsystem nach Anspruch 10, **dadurch gekennzeichnet, daß** an dem Wandungsabschnitt (30) ein erstes Rastelement (36) vorgesehen ist.

12. Rohrsystem nach Anspruch 11, **dadurch gekennzeichnet, daß** das erste Rastelement (36) des ersten Rohres (10) nach einer Verbindung des ersten und zweiten Rohres (10, 14) mit einem Rohrvorsprung (22) des zweiten Rohres (14) zusammenwirkt und eine Rastverbindung ausbildet.

13. Rohrsystem nach einem der vorhergehenden Ansprüche, **dadurch gekennzeichnet, daß** das erste Rohr (10) aus Polypropylen besteht.

14. Rohrsystem nach einem der vorhergehenden Ansprüche, **dadurch gekennzeichnet, daß** das Dichtelement (12) aus einem thermoplastischen Elastomer besteht.

15. Rohr (10) mit Dichtelement (12), insbesondere für Flächenheiz- bzw. Flächenkühlsysteme, herstellbar durch ein 2-Komponenten-Spritzgußverfahren, bei dem zunächst das Rohr (10) aus einem ersten Kunststoff gespritzt und danach das Dichtelement (12) aus einem zweiten Kunststoff in das Rohr (10) eingespritzt wird, oder umgekehrt.

16. Verfahren zur Herstellung einer Baugruppe aus einem Rohr (10) und einem Dichtelement (12), bei dem in einem ersten Schritt das Rohr (10) aus einem ersten Kunststoffmaterial gespritzt wird, wobei Aussparungen (18) für das Dichtelement (12) vorgesehen werden, und in einem zweiten Schritt das Dichtelement (12) aus einem zweiten Kunststoffmaterial in das Rohr (10) eingespritzt wird, so daß das Rohr (10) und das Dichtelement (12) eine Formschluß- und Reibschlußverbindung eingehen.
